# EUROPEAN PATENT APPLICATION

(11) **EP 4 672 597 A1**
(43) Date of publication of application: **31.12.2025**
(21) Application number: 24883758.5
(22) Date of filing: 11.03.2024
(51) Int. Cl.: H02S 30/10, H02S 30/00, H02S 20/20, F24S 25/632, H02S 40/00

(54) **SOLAR PANEL ASSEMBLY AND RAILING ASSEMBLY**

(30) Priority: 02.11.2023 CN 202322964888 U; 07.02.2024 CN 202420289146 U
(71) Applicant: Shenzhen Hello Tech Energy Co., Ltd, Shenzhen, Guangdong 518109 (CN)
(72) Inventor: LAI, Huilong, Shenzhen, Guangdong 518109 (CN); YU, Huajun, Shenzhen, Guangdong 518109 (CN); ZHU, Yanjun, Shenzhen, Guangdong 518109 (CN); KONG, Shengxiang, Shenzhen, Guangdong 518109 (CN)
(74) Representative: Range, Christopher William
(86) International application number: PCT/CN2024/081011
(87) International publication number: WO 2025/091743

(57) **Abstract**

Provided are a solar panel assembly (10) and a railing assembly (50). The solar panel assembly (10) includes a solar panel (100) and at least one connection structure (200). The solar panel (100) is provided with at least one connection hole group (110). Each of the at least one connection hole group (110) includes a plurality of connection holes (112) arranged at intervals. Each of the at least one connection structure (200) is fitted with one of the at least one connection hole group (110) and includes a tensioning rope (210). The tensioning rope (210) is sequentially threaded through the plurality of connection holes (112) in the one of the at least one connection hole group (110). A part of the tensioning rope (210) threaded through the plurality of connection holes (112) includes a first tensioning section (212) and a second tensioning section (214). The first tensioning section (212) is located on a first side of the solar panel (100). The second tensioning section (214) is located on a second side of the solar panel (100). The first side and the second side of the solar panel (100) are opposite to each other.

## Description

### PRIORITY INFORMATION

This application claims priority to and benefits of Chinese Patent Application No. 202322964888.8, filed with China National Intellectual Property Administration on November 02, 2023, and Chinese Patent Application No. 202420289146.1, filed with China National Intellectual Property Administration on February 07, 2024, the entire disclosures of which are incorporated herein by reference.

### FIELD

The present disclosure relates to the field of photovoltaic technologies, and more particularly, to a solar panel assembly and a railing assembly.

### BACKGROUND

In the related art, a solar panel has a mounting hole, and a nylon strap is threaded through the mounting hole to hang the solar panel on the railing.

Under wind load, the solar panel may undergo significant deformation due to its low rigidity, thereby inducing a tensile membrane effect. An extremely high tensile force may be generated at a periphery of the solar panel, which in turn leads to damage to the solar panel.

### SUMMARY

The present disclosure aims to solve at least one of the technical problems in the related art.

To this end, a first aspect of the present disclosure provides a solar panel assembly.

A second aspect of the present disclosure provides a railing assembly.

In view of this, a first aspect of the present disclosure provides a solar panel assembly. The solar panel assembly includes a solar panel and at least one connection structure. The solar panel has at least one connection hole group. Each of the at least one connection hole group includes a plurality of connection holes arranged at intervals. Each of the at least one connection structure is fitted with one of the at least one connection hole group and includes a tensioning rope. The tensioning rope is sequentially threaded through the plurality of connection holes in the one of the at least one connection hole group. A part of the tensioning rope threaded through the plurality of connection holes includes a first tensioning segment and a second tensioning segment. The first tensioning segment is located on a first side of the solar panel. The second tensioning segment is located on a second side of the solar panel. The first side of the solar panel and the second side of the solar panel are opposite to each other.

The solar panel assembly according to the present disclosure includes the solar panel and the at least one connection structure.

The solar panel has at least one connection hole group, each of which includes the plurality of connection holes arranged at intervals. The number of connection hole groups may include one, two, three, four, etc., which are not enumerated herein. The number of connection holes in each of the at least one connection hole group may include two, three, four, five, etc., which are not enumerated herein.

Each of the at least one connection structure is fitted with the one of the at least one connection hole group to mount and fix the solar panel on a railing.

Each of the at least one connection structure includes the tensioning rope, which is sequentially threaded through the plurality of connection holes in one of the at least one connection hole group. Specifically, the part of the tensioning rope threaded through the plurality of connection holes includes the first tensioning segment and the second tensioning segment. The solar panel has the first side and the second side opposite to the first side. The first tensioning segment is located on the first side of the solar panel, and the second tensioning segment is located on the second side of the solar panel. In this way, the tensioning rope can be fitted with the solar panel in a plurality of directions and at a plurality of angles. This configuration can increase a contact area between the connection structure and the solar panel to effectively support the solar panel. Further, a tensile force exerted on the solar panel can be reduced under wind load, which can thus protect the solar panel. In this way, a probability of damage to the solar panel can be reduced.

In addition, this configuration can increase a contact area between the tensioning rope and the solar panel. When the solar panel assembly is exposed to a strong wind environment, since the tensioning rope itself can be deformed and bent, the solar panel correspondingly has a certain amount of movement space. In this way, wind resistance of the solar panel can be advantageously improved, preventing damage to the solar panel due to a long-term impact of strong wind on the solar panel.

When a plurality of connection hole groups and a plurality of connection structures are provided. The number of connection structures matches the number of connection hole groups, and the mounting positions of the connection structures match the positions of the connection hole groups. With this configuration, the tensioning rope is in contact with the solar panel in the plurality of directions and at the plurality of angles according to actual usage requirements, which can thus meet requirements of ensuring a service life of the solar panel under various operating conditions.

A second aspect of the present disclosure provides a railing assembly. The railing assembly includes a railing and the solar panel assembly in the first aspect. The railing includes a plurality of rods. Each of the tensioning ropes has an end connected to a corresponding rod of the plurality of rods. One of the plurality of rods is threaded through a corresponding lifting hole of lifting holes.

The railing assembly according to the present disclosure includes the railing and the solar panel assembly. Since the railing assembly includes the solar panel assembly in the first aspect, it has all the beneficial effects of the above-mentioned solar panel assembly, which are not exhaustively reiterated herein.

Additional aspects and advantages of the present disclosure will become apparent in the following description or may be learned from the practice of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 shows a schematic structural view of a railing assembly according to an embodiment of the present disclosure.
FIG. 2 is a partial enlarged view of part A of the railing assembly shown in FIG. 1.
FIG. 3 is a partial enlarged view of part B of the railing assembly shown in FIG. 1.
FIG. 4 shows a schematic structural view of a solar panel and a protective member according to an embodiment of the present disclosure.
FIG. 5 is a schematic structural view of a solar panel according to an embodiment of the present disclosure.
FIG. 6 shows a schematic structural view of a first part of a railing assembly according to an embodiment of the present disclosure.
FIG. 7 shows a schematic structural view of a second part of a railing assembly according to an embodiment of the present disclosure.
FIG. 8 shows a schematic structural view of a railing assembly according to a first embodiment of the present disclosure.
FIG. 9 is a partial enlarged view of part A of the railing assembly shown in FIG. 8.
FIG. 10 shows a schematic structural view of a solar panel according to a first embodiment of the present disclosure.
FIG. 11 shows a schematic structural view of a railing assembly according to a second embodiment of the present disclosure.
FIG. 12 is a partial enlarged view of part B of the railing assembly shown in FIG. 11.
FIG. 13 shows a schematic structural view of a railing assembly according to a third embodiment of the present disclosure.
FIG. 14 is a partial enlarged view of part C of the railing assembly shown in FIG. 13.
FIG. 15 is a partial enlarged view of part D of the railing assembly shown in FIG. 13.
FIG. 16 shows a schematic partial structural view of a railing assembly according to a third embodiment of the present disclosure.
FIG. 17 shows a schematic structural view of a solar panel and a protective member according to a third embodiment of the present disclosure.
FIG. 18 shows a schematic structural view of a solar panel according to a third embodiment of the present disclosure.
FIG. 19 shows a schematic structural view of a first part of a railing assembly according to a third embodiment of the present disclosure.
FIG. 20 shows a schematic structural view of a second part of a railing assembly according to a third embodiment of the present disclosure.

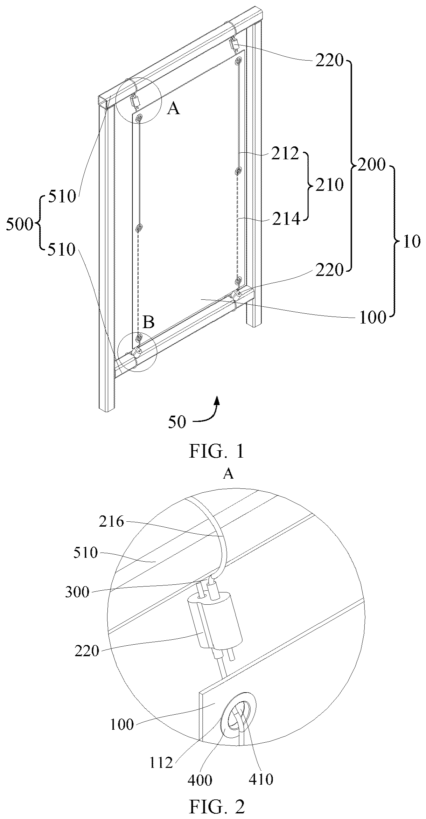

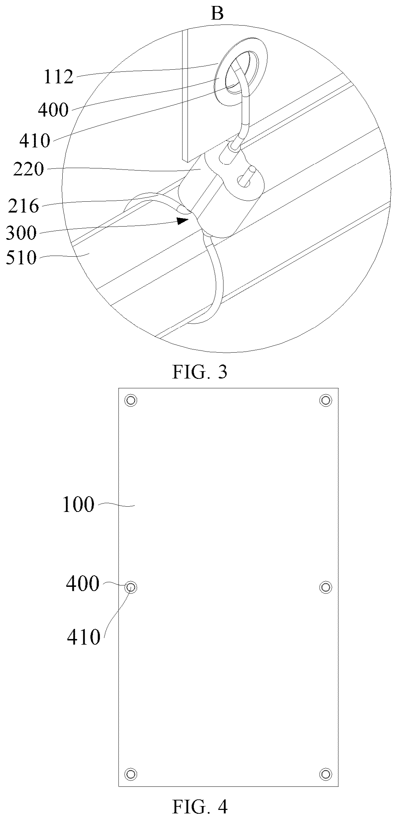

A correspondence between reference numerals and component names in FIG. 1 to FIG. 7 is as follows:
10 solar panel assembly, 100 solar panel, 110 connection hole group, 112 connection hole, 120 outer edge of solar panel, 122 connection edge, 200 connection structure, 210 tensioning rope, 212 first tensioning segment, 214 second tensioning segment, 216 end, 220 connector, 222 connector body, 2222 first cylinder, 2224 second cylinder, 224 switch, 300 mounting hole, 400 protective member, 410 through hole, 50 railing assembly, 500 railing, 510 rod.

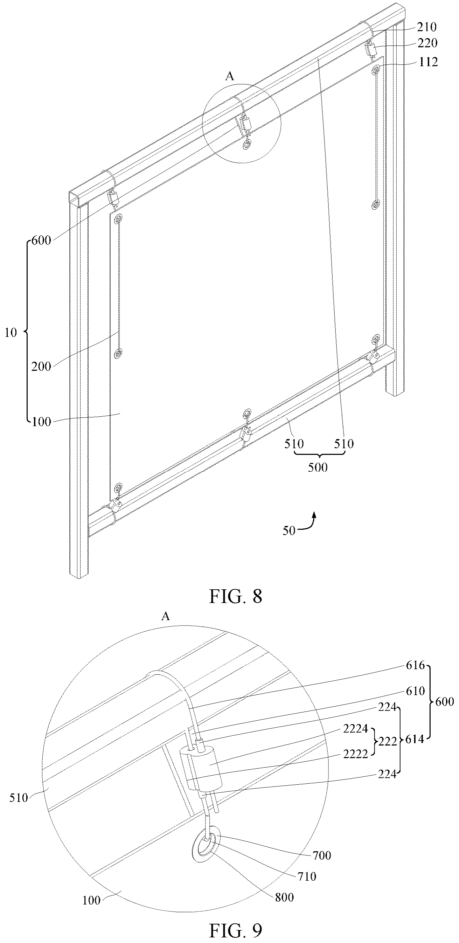

A correspondence between reference numerals and component names in FIG. 8 to FIG. 20 is as follows:
10 solar panel assembly, 100 solar panel, 110 connection hole group, 112 connection hole, 120 outer edge of solar panel, 130 positioning hole, 130a first positioning hole, 130b second positioning hole, 200 connection structure, 210 tensioning rope, 212 first tensioning segment, 214 second tensioning segment, 216 end, 220 connector, 222 connector body, 2222 first cylinder, 2224 second cylinder, 224 switch, 300 mounting hole, 400 protective member, 410 through hole, 50 railing assembly, 500 railing, 510 rod, 600 lifting member, 610 lifting hole, 614 adjustment portion, 616 lifting belt, 700 protective structure, 710 fitting hole, 800 chamfer.

### DETAILED DESCRIPTION OF THE EMBODIMENTS

In order to more clearly understand the above-mentioned objects, features and advantages of the present disclosure, embodiments of the present disclosure will be further described below. It should be noted that the embodiments of the present disclosure and the features in the embodiments may be combined with each other without conflict.

Many specific details are set forth in the following description in order to facilitate a full understanding of the present application, but the present application may also be implemented in other ways different from those described herein. Therefore, the scope of protection of the present application is not limited by the specific embodiments disclosed below.

### First embodiment:

Referring to FIG. 1 to FIG. 7, a solar panel assembly 10 and a railing assembly 50 according to some embodiments of the present disclosure are described below.

As shown in FIG. 1, FIG. 2, FIG. 3, FIG. 5, FIG. 6, and FIG. 7, a solar panel assembly 10 according to some embodiments of the present disclosure includes a solar panel 100 and a plurality of connection structures 200. The solar panel 100 is provided with a plurality of connection hole groups 110. Each of the plurality of connection hole groups 110 includes a plurality of connection holes 112 arranged at intervals. Each of the plurality of connection structures 200 is fitted with one of the plurality of connection hole groups 110 and includes a tensioning rope 210 and two connectors 220. The tensioning rope 210 is sequentially threaded through the plurality of connection holes 112 in the one of the plurality of connection hole groups 110. Each of two ends 216 of the tensioning rope 210 extends beyond an outer surface of the solar panel 100. Each of the two connectors 220 is detachably connected to one end 216 of the tensioning rope 210. A mounting hole 300 is enclosed by each of the two connectors 220 and the end 216 of the tensioning rope 210. Each of the two connectors 220 is configured to adjust a length of a part of the tensioning rope 210 located between the two connectors 220.

The solar panel assembly 10 according to the present disclosure includes the solar panel 100 and the plurality of connection structures 200.

The solar panel 100 is provided with the plurality of connection hole groups 110, each of which includes the plurality of connection holes 112 arranged at intervals.

Each of the plurality of connection structures 200 is fitted with the one of the plurality of connection hole groups 110 to mount and fix the solar panel 100 on a railing 500.

Each of the plurality of connection structures 200 includes the tensioning rope 210 and the two connectors 220. The tensioning rope 210 is sequentially threaded through the plurality of connection holes 112 in the one of the plurality of connection hole groups 110. It can be understood that a part of the tensioning rope 210 is located between any two adjacent connection holes 112. That is, a part of the solar panel 100 located between the two connection holes 112 is in contact with the tensioning rope 210. With the tensioning ropes 210 of the plurality of connection structures 200 fitted with the solar panel 100, a contact area between the plurality of connection structures 200 and the solar panel 100 can be increased to effectively support the solar panel 100. Further, a tensile force exerted on the solar panel 100 can be reduced under wind load, which can thus protect the solar panel 100. In this way, a probability of damage to the solar panel 100 can be reduced.

This configuration increases a contact area between the tensioning rope 210 and the solar panel 100. When the solar panel assembly 10 is exposed to a strong wind environment, since the tensioning rope 210 can be deformed and bent, the solar panel 100 correspondingly has a certain amount of movement space. In this way, wind resistance of the solar panel 100 can be advantageously improved, preventing damage to the solar panel 100 due to a long-term impact of strong wind on the solar panel 100.

In addition, since the tensioning rope 210 has the two ends 216, each of which is detachably connected to one of the two connectors 220. The ends 216 of the tensioning rope 210 may be looped around a rod 510 of the railing 500, and then the tensioning rope 210 and the rod 510 can be assembled together by using the connection structure 200. It can be understood that the mounting hole 300 is enclosed by the connector 220 and the end 216 of the tensioning rope 210, and the rod 510 is threaded through the mounting hole 300.

Further, each of the two connectors 220 is configured to adjust the length of the part of the tensioning rope 210 located between the two connectors 220. That is, the tensioning rope 210 can be pulled by the respective connector 220 to tighten the tensioning rope 210, thereby adjusting a fitting dimension between the tensioning rope 210 and the solar panel 100 to meet mounting requirements in different mounting scenarios. In this way, effective and reliable structural support for prolonging a service life of the solar panel 100 is provided.

Meanwhile, the plurality of connection hole groups 110 and the plurality of connection structures 200 are provided. The number of connection structures 200 matches the number of connection hole groups 110, and mounting positions of the connection structures 200 match positions of the connection hole groups 110. With this configuration, the tensioning rope 210 is in contact with the solar panel 100 in the plurality of directions and at the plurality of angles according to actual use requirements, which can thus meet the requirement of ensuring the service life of the solar panel 100 under various operating conditions.

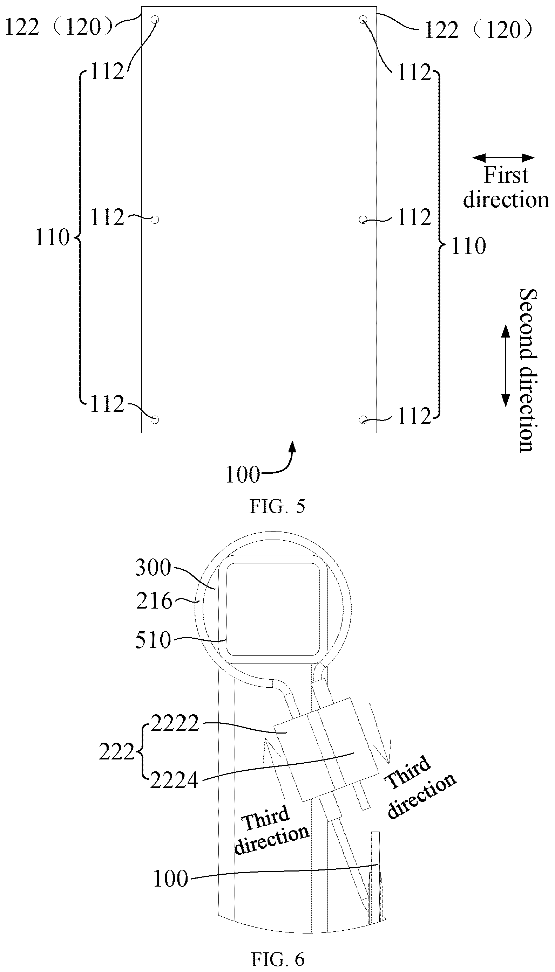

In some embodiments, optionally, as shown in FIG. 5, the plurality of connection hole groups 110 are spaced apart from each other in a first direction, and the plurality of connection holes 112 in each of the plurality of connection hole groups 110 are spaced apart from each other in a second direction. The first direction differs from the second direction.

In this embodiment, the arrangement positions of the plurality of connection hole groups 110 are further defined in such a manner that the plurality of connection hole groups 110 are spaced apart from each other in the first direction, and the plurality of connection holes 112 in each of the plurality of connection hole groups 110 are spaced apart from each other in the second direction. That is, the arrangement direction of the plurality of connection hole groups 110 differs from the arrangement direction of the plurality of connection holes 112. This configuration can increase fitting directions and angles between the plurality of connection structures 200 and the solar panel 100, and can thus effectively reduce the tensile force exerted on the solar panel 100.

In some embodiments, optionally, the first direction is perpendicular to the second direction, and one of the first direction and the second direction is a gravity direction.

In this embodiment, the arrangement positions of the plurality of connection hole groups 110 are further defined in such a manner that the arrangement direction of the plurality of connection hole groups 110 is perpendicular to the arrangement direction of the plurality of connection holes 112. For example, the plurality of connection hole groups 110 are spaced apart from each other in a horizontal direction, and the plurality of connection holes 112 in each of the plurality of connection hole groups 110 are spaced apart from each other in the gravity direction. For another example, the plurality of connection hole groups 110 are spaced apart from each other in the gravity direction, and the plurality of connection holes 112 in each of the plurality of connection hole groups 110 are spaced apart from each other in the horizontal direction.

The plurality of connection hole groups 110 spaced apart from each other in the horizontal direction and the plurality of connection holes 112, spaced apart from each other in the gravity direction, in each of the plurality of connection hole groups 110 are taken as an example for illustration. This configuration allows the solar panel 100 to be subjected only to a horizontal force rather than a vertical tensile force, preventing the solar panel 100 from being subjected to an additional tensile force generated by the tensile membrane effect, thereby protecting the solar panel 100 from damage.

In some embodiments, optionally, as shown in FIG. 5, an outer edge of the solar panel 120 includes a plurality of connection edges 122. The plurality of connection edges 122 are sequentially connected end to end, and one connection hole group 110 is provided at each of the plurality of connection edges 122.

In this embodiment, the arrangement positions of the plurality of connection hole groups 110 are further defined.

The outer edge 120 of the solar panel includes the plurality of connection edges 122 sequentially connected end to end. Any two adjacent connection edges 122 among the plurality of connection edges 122 are not collinear, that is, the plurality of connection edges 122 are enclosed to form a ring structure. By providing one connection hole group 110 at each of the plurality of connection edges 122, the contact area between the plurality of connection structures 200 and the solar panel 100 can be increased.

In some other embodiments, a part of the solar panel 100 located inside the outer edge of the solar panel 100 is referred to as a middle part of the solar panel 100. Some connection hole groups 110 among the plurality of connection hole groups 110 are located in the middle part of the solar panel 100, and another some connection hole groups 110 among the plurality of connection hole groups 110 are located at the edge of the solar panel 100.

In some embodiments, optionally, as shown in FIG. 1, the part of the tensioning rope 210 threaded through the plurality of connection holes 112 includes a first tensioning segment 212 and a second tensioning segment 214. The first tensioning segment 212 is located on a first side of the solar panel 100, and the second tensioning segment 214 is located on a second side of the solar panel 100. The first side of the solar panel 100 and the second side of the solar panel 100 are opposite to each other.

In this embodiment, the fitting structure of the tensioning rope 210 and the plurality of connection holes 112 is further defined in such a manner that the part of the tensioning rope 210 threaded through the plurality of connection holes 112 includes the first tensioning segment 212 and the second tensioning segment 214; the solar panel 100 has the first side and the second side opposite to the first side; and the first tensioning segment 212 is located on the first side of the solar panel 100, and the second tensioning segment 214 is located on the second side of the solar panel 100. In this way, the tensioning rope 210 can be fitted with the solar panel 100 in the plurality of directions and at the plurality of angles to effectively reduce the tensile force exerted on the solar panel 100, which can thus protect the solar panel 100. In this way, the probability of the damage to the solar panel 100 can be reduced.

Optionally, the tensioning rope 210 includes at least one first tensioning segment 212.

Optionally, the tensioning rope 210 includes at least one second tensioning segment 214.

When a plurality of first tensioning segments 212 and a plurality of second tensioning segments 214 are both provided, one of the plurality of second tensioning segments 214 is provided between any two adjacent first tensioning segments 212 among the plurality of first tensioning segments 212.

In some embodiments, optionally, as shown in FIG. 6, each of the two connectors 220 includes a connector body 222 configured to allow the tensioning rope 210 to move in a third direction to reduce a length of a part of the tensioning rope 210 located between the two connectors 220.

In this embodiment, the structure of each of the two connectors 220 is further defined in such a manner that each of the two connectors 220 includes the connector body 222 configured to allow the tensioning rope 210 to move in the third direction to reduce the length of the part of the tensioning rope 210 located between the two connectors 220. That is, the connector body 222 can unidirectionally adjust the length of the part of the tensioning rope 210 located between the two connectors 220 to meet a use requirement of tightening the tensioning rope 210.

Moreover, since the tensioning rope 210 is tightened unidirectionally, the tensioning rope 210 is unlikely to be loosened even if an operator accidentally touches the tensioning rope 210 or in a strong wind environment. Thus, the fitting dimension between the plurality of connection structures 200 and the solar panels 100 can be ensured. Thus, the service life of the solar panels 100 can be ensured.

The arrow in FIG. 6 indicates the third direction.

Optionally, the third direction includes a clockwise direction.

Optionally, the third direction includes a counterclockwise direction.

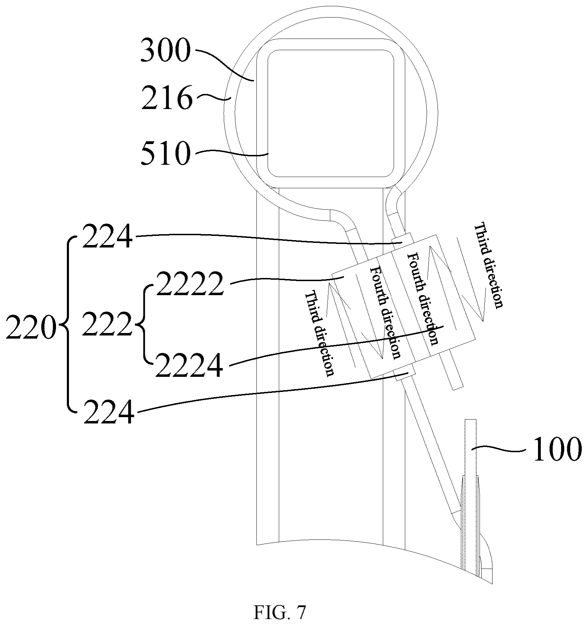

In some embodiments, optionally, as shown in FIG. 7, each of the two connectors 220 further includes a switch 224 disposed at the connector body 222. The connector body 222 is further configured to allow the tensioning rope 210 to move in a fourth direction when the switch 224 is triggered, to increase the length of the part of the tensioning rope 210 located between the two connectors 220. The third direction and the fourth direction are opposite to each other.

In this embodiment, the structure of the connector 220 is further defined in such a manner that the connector 220 further includes the switch 224 disposed at the connector body 222. That is, the connector body 222 serves as a mounting carrier for the switch 224, and performs the mounting and fixing functions for the switch 224.

When the tensioning rope 210 needs to be loosened, in the case that the switch 224 is triggered, the tensioning rope 210 can move in the fourth direction via the connector body 222, thereby increasing the length of the part of the tensioning rope 210 located between the two connectors 220.

That is, the tensioning rope 210 can move in the fourth direction only when the switch 224 is operated. In this way, loosening of the tensioning rope 210 can be effectively prevented due to accidental touch of the connector body 222 by the user. As a result, effectiveness and feasibility of the solar panel assembly 10 during use are met, and safety and reliability of the solar panel assembly 10 during use are improved, which helps extend the service life of the solar panel 100.

In FIG. 7, the inner side arrows indicate the fourth direction, and the outer side arrows indicate the third direction.

In some embodiments, optionally, as shown in FIG. 6 and FIG. 7, the connector body 222 includes a first cylinder 2222 and a second cylinder 2224. The second cylinder 2224 is connected to a side of the first cylinder 2222, and the end 216 of the tensioning rope 210 passes through the first cylinder 2222 and is inserted into the second cylinder 2224. The mounting hole 300 is enclosed by the end 216 of the tensioning rope 210, the first cylinder 2222, and the second cylinder 2224. Each of the first cylinder 2222 and the second cylinder 2224 is provided with the switch 224.

In this embodiment, the structure of the connector body 222 is further defined in such a manner that the connector body 222 includes the first cylinder 2222 and the second cylinder 2224. The first cylinder 2222 is connected to the second cylinder 2224 and located on a side of the second cylinder 2224. Specifically, a first axis of the first cylinder 2222 is located on a side of a second axis of the second cylinder 2224.

The end 216 of the tensioning rope 210 passes through the first cylinder 2222 and is inserted into the second cylinder 2224. The mounting hole 300 is enclosed by the end 216 of the tensioning rope 210, the first cylinder 2222, and the second cylinder 2224. That is, the end 216 of the tensioning rope 210 first passes through the first cylinder 2222, and then passes through the second cylinder 2224.

Each of the first cylinder 2222 and the second cylinder 2224 is provided with the switch 224. That is, the first cylinder 2222 is provided with the switch 224, and the second cylinder 2224 is provided with the switch 224. In the case that the tensioning rope 210 needs to move in the fourth direction, the switch 224 on the first cylinder 2222 and the switch 224 on the second cylinder 2224 are triggered, the connector body 222 can allow the tensioning rope 210 to move in the fourth direction, thereby increasing the length of the part of the tensioning rope 210 located between the two connectors 220.

In some embodiments, optionally, as shown in FIG. 1, FIG. 2, FIG. 3, and FIG. 4, the solar panel assembly 10 further includes a plurality of protective members 400, and the tensioning rope 210 is threaded through each of the plurality of connection holes 112 via a corresponding protective member of the plurality of protective members 400.

In this embodiment, the structure of the solar panel assembly 10 is further defined in such a manner that the solar panel assembly 10 further includes the plurality of protective members 400, and each of the plurality of connection holes 112 is fitted with the tensioning rope 210 via a corresponding protective member of the plurality of protective members 400. Specifically, the tensioning rope 210 is threaded through each of the plurality of connection holes 112 via a corresponding protective member of the plurality of protective members 400.

The protective member 400 is located between the connection hole 112 and the tensioning rope 210 and can protect the connection hole 112. In this way, the tensioning rope 210 is not likely to be in direct contact with a hole wall of the connection hole 112 to reduce a probability of damage to the solar panel 100 caused by damage to the hole wall of the connection hole 112. In this way, the service life of the solar panel 100 is prolonged.

Optionally, the protective member 400 is detachably connected to the connection hole 112 through, for example, screw connection, riveting, magnetic connection, insertion and so on. This configuration facilitates cleaning and maintenance of the protective member 400 and the connection hole 112 while ensuring reliability of the connection between the protective member 400 and the connection hole 112.

That is, the protective member 400 and the connection hole 112 are separated from each other or assembled together according to actual use needs. For example, when the protective member 400 is severely damaged, the protective member 400 can be removed and replaced with a new protective member 400 without affecting the use of other components of the solar panel assembly 10.

In some embodiments, optionally, as shown in FIG. 1, FIG. 2, FIG. 3, and FIG. 4, the hole wall of the connection hole 112 is covered by the protective member 400, and the protective member 400 has a through hole 410. The tensioning rope 210 is threaded through the through hole 410. The protective member 400 is a metallic member.

In this embodiment, the matching arrangement between the protective member 400 and the connection hole 112 is further defined in such a manner that the protective member 400 is the metallic member and has the through hole 410, through which the tensioning rope 210 can pass.

The hole wall of the connection hole 112 is covered by the protective member 400. With this configuration, the protective member 400 can protect the hole wall of the connection hole 112 in all directions and at all angles, thereby preventing the hole wall of the connection hole 112 from being in direct contact with the tensioning rope 210.

It can be understood that since the protective member 400 is the metallic member, it has high strength, facilitating prolongation of a service life of the protective member 400.

As shown in FIG. 1, a railing assembly 50 according to another some embodiments of the present disclosure includes a railing 500 and the solar panel assembly 10 according to any one of the embodiments described above. The railing 500 includes a plurality of rods 510. Each of the plurality of rods 510 is threaded through each of the mounting holes 300.

The railing assembly 50 according to the present disclosure includes the railing 500 and the solar panel assembly 10. Since the railing assembly 50 includes the solar panel assembly 10 according to any one of the embodiments described above, it has all the beneficial effects of the above-mentioned solar panel assembly 10, which are omitted here.

It can be understood that one of the plurality of rods 510 is threaded through each of the mounting holes 300 of the solar panel assembly 10 to allow the solar panel assembly 10 to be effectively assembled with the railing 500.

Optionally, the solar panel assembly 10 includes a solar panel 100 and two connection structures 200. The solar panel 100 has two connection hole groups 110, and each of the two connection hole groups 110 includes three connection holes 112. The two connection hole groups 110 are spaced apart from each other in a horizontal direction, and the three connection holes 112 are spaced apart from each other in a gravity direction, wherein the horizontal direction is perpendicular to the gravity direction. A high-strength tensioning rope 210 (e.g., a cable) is threaded through the connection hole group 110 to increase a contact area between the solar panel 100 and the cable. In this way, the solar panel 100 is only subjected to a horizontal force rather than a vertical tensile force under the action of load.

The connector body 222 with the unidirectional adjustment is fixed to a crossbar of the railing 500 and is not restricted in terms of the tensioning direction, allowing the cable to be tensioned increasingly tighter. To loosen the cable, the switch 224 at the connector body 222 needs to be pressed, and then the cable can slide.

This configuration prevents the solar panel 100 from being subjected to the additional tension generated by the tensile membrane effect, thus preventing the damage to the solar panel 100.

The connector 220 can enable quick tool-free mounting, saving mounting costs.

The solar panel 100 has a plurality of connection holes 112 at a periphery of the solar panel 100, and the tensioning rope 210 is threaded through each of the plurality of connection holes 112 via the protective member 400.

The solar panel 100 is fastened to the railing 500 by the cable and the connectors 220, with each of two ends of the cable fixed by the corresponding connector 220.

The connector 220 can allow unidirectional tensioning under normal conditions to ensure that the tensioning rope 210 does not become loose. After the switch 224 is pressed, the cable can be adjusted bidirectionally, completing disassembling of the solar panel assembly 10.

### Second embodiment:

Referring to FIG. 8 to FIG. 20, a solar panel assembly 10 and a railing assembly 50 according to some embodiments of the present disclosure are described below.

As shown in FIG. 8, FIG. 9, FIG. 10, FIG. 11, FIG. 13, and FIG. 18, a solar panel assembly 10 according to some embodiments of the present disclosure includes a solar panel 100, a plurality of connection structures 200, and a plurality of lifting members 600. The solar panel 100 is provided with a plurality of connection hole groups 110 and a plurality of positioning holes 130. The plurality of connection hole groups 110 are spaced apart from each other in a first direction. Each of the plurality of connection hole groups 110 includes a plurality of connection holes 112 arranged to be spaced apart from each other in a second direction. The second direction differs from the first direction. At least one positioning hole 130 among the plurality of positioning holes 130 is located between any two adjacent connection hole groups 110 among the plurality of connection hole groups 110. Each of the plurality of connection structures 200 is fitted with one of the plurality of connection hole groups 110. Each of the plurality of connection structures 200 includes a tensioning rope 210 sequentially threaded through the plurality of connection holes 112 in the one of the plurality of connection hole groups 110. A part of the tensioning rope 210 threaded through the plurality of connection holes 112 includes a first tensioning segment 212 and a second tensioning segment 214. The first tensioning segment 212 is located on a first side of the solar panel 100, and the second tensioning segment 214 is located on a second side of the solar panel 100. The first side of the solar panel 100 and the second side of the solar panel 100 are opposite to each other. Each of the plurality of lifting members 600 is connected to a corresponding positioning hole of the plurality of positioning holes 130 and has a lifting hole 610.

The solar panel assembly 10 according to the present disclosure includes the solar panel 100, the plurality of connection structures 200, and the plurality of lifting members 600.

The solar panel 100 is provided with the plurality of connection hole groups 110 spaced apart from each other in the first direction, and each of the plurality of connection hole groups 110 includes the plurality of connection holes 112 spaced apart from each other in the second direction. The number of connection hole groups 110 may include two, three, four, etc., which are not enumerated herein. The number of connection holes 112 in each of the plurality of connection hole groups 110 may include two, three, four, five, etc., which are not enumerated herein. The arrangement direction of the connection hole groups 110 differs from the arrangement direction of the plurality of connection holes 112. This configuration can increase the fitting directions and angles between the plurality of connection structures 200 and the solar panel 100.

Each of the plurality of connection structures 200 is fitted with one of the plurality of connection hole groups 110 to mount and fix the solar panel 100 on the railing 500.

Each of the plurality of connection structures 200 includes the tensioning rope 210 sequentially threaded through the plurality of connection holes 112 in the one of the plurality of connection hole groups 110. Specifically, the part of the tensioning rope 210 threaded through the plurality of connection holes 112 includes the first tensioning segment 212 and the second tensioning segment 214. The solar panel 100 has the first side and the second side opposite to the first side. The first tensioning segment 212 is located on the first side of the solar panel 100, and the second tensioning segment 214 is located on the second side of the solar panel 100. In this way, the tensioning rope 210 can be fitted with the solar panel 100 in the plurality of directions and at the plurality of angles. This configuration increases a contact area between the connection structure 200 and the solar panel 100 to effectively support the solar panel 100. Further, the tensile force exerted on the solar panel 100 can be reduced under the wind load, which can thus protect the solar panel 100. In this way, the probability of damage to the solar panel 100 can be reduced.

In addition, this configuration increases the contact area between the tensioning rope 210 and the solar panel 100. When the solar panel assembly 10 is exposed to the strong wind environment, since the tensioning rope 210 itself can be bent and deformed, the solar panel 100 correspondingly has a certain amount of movement space. In this way, the wind resistance of the solar panel 100 can be advantageously improved, preventing the damage to the solar panel 100 due to the long-term impact of the strong wind on the solar panel 100.

A plurality of connection hole groups 110 and a plurality of connection structures 200 are provided. The number of connection structures 200 matches the number of connection hole groups 110, and the mounting positions of the connection structures 200 match the positions of the connection hole groups 110. This configuration allows the tensioning rope 210 to be in contact with the solar panel 100 in the plurality of directions and at the plurality of angles according to the actual use requirements, which can thus meet the requirement of ensuring the service life of the solar panel 100 under the various operating conditions.

Further, the solar panel 100 has the plurality of positioning holes 130, and the solar panel assembly 10 includes the plurality of lifting members 600. Each of the plurality of lifting members 600 cooperates with a positioning hole 130 and has the lifting hole 610. One rod 510 of the railing 500 is threaded through the respective one of the lifting holes 610.

That is, the plurality of connection hole groups, the plurality of positioning holes 130, the plurality of connection structures 200, and the plurality of lifting members 600 cooperate with each other to securely and reliably assemble the solar panel 100 on the railing 500.

At least one positioning hole 130 among the plurality of positioning holes 130 is located between any two adjacent connection hole groups 110 among the plurality of connection hole groups 110. Each of the plurality of lifting members 600 is connected with one of the plurality of positioning holes 130. Compared with the solar panel 100 being assembled at the railing 500 only through the plurality of connection structures 200, this configuration increases a fitting area and a fitting angle between the solar panel 100 and the railing 500, allowing the solar panel 100 to be assembled at the railing 500 stably and securely. In particular, when the dimension of the solar panel 100 is relatively large, the middle part of the solar panel 100 is prone to shaking and arching up under horizontal load. Therefore, in the present disclosure, by rationally configuring the fitting structures of the plurality of connection hole groups 110 and the plurality of positioning holes 130, balance and consistency of forces at different positions of the solar panel 100 can be ensured, and thus the shaking and the arching up can be effectively avoided. In addition, by providing the at least one positioning hole 130 between the two adjacent connection hole groups 110 and using the plurality of lifting members 600 to hang the solar panel 100, the fitting configuration between the lifting members 600 and the positioning holes 130 has advantages of less material input, easier mounting, and higher assembling efficiency compared to the fitting configuration between the connection structures 200 and the connection hole groups 110. This helps reduce production and mounting costs of the solar panel 100 while ensuring assembling stability of the solar panel 100, thereby improving service performance and market competitiveness of the product.

Optionally, the connection hole group 110 is located at an edge of the solar panel 100.

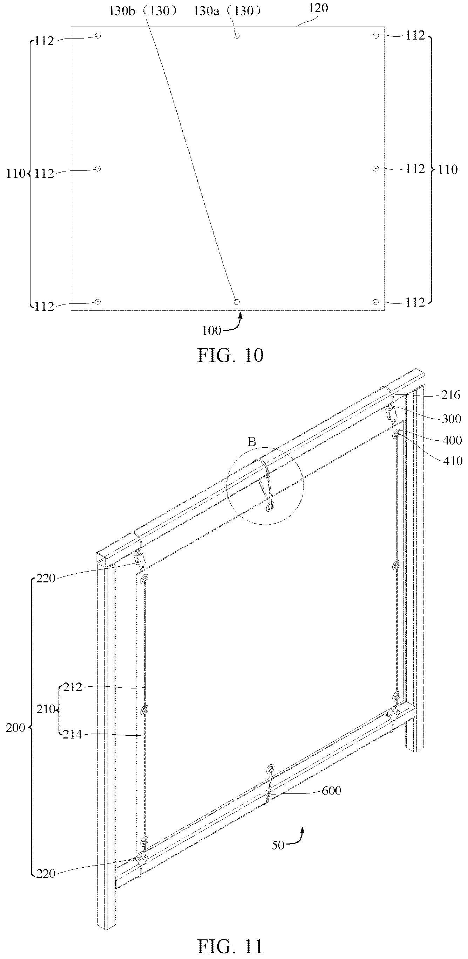

In some embodiments, optionally, as shown in FIG. 10, in the case that a plurality of positioning holes 130 are provided between any two adjacent connection hole groups 110, the plurality of positioning holes 130 located between the two adjacent connection hole groups 110 include a first positioning hole 130a and a second positioning hole 130b that are spaced apart from each other in the second direction.

In this embodiment, the fitting structures of the plurality of connection hole groups 110 and the plurality of positioning holes 130 are further defined.

In the case that the plurality of positioning holes 130 are provided between any two adjacent connection hole groups 110, the plurality of positioning holes 130 between the two adjacent connection hole groups 110 are classified. The plurality of positioning holes 130 includes the first positioning hole 130a and the second positioning hole 130b.

Specifically, the plurality of connection hole groups 110 are spaced apart from each other in the first direction, and each of the plurality of connection hole groups 110 includes the plurality of connection holes 112 spaced apart from each other in the second direction. The plurality of positioning holes 130 located between the two adjacent connection hole groups 110 include the first positioning hole 130a and the second positioning hole 130b that are spaced apart from each other in the second direction.

This configuration allows the connection holes 112 and the positioning holes 130 for hanging to be provided at different positions of the solar panel 100. As a result, even if for a relatively large-sized solar panel 100, it can be stably and securely assembled on the railing 500. In this way, the solar panel 100 can be effectively supported. Further, the tensile force exerted on the solar panel 100 can be reduced under the wind load, which can thus protect the solar panel 100 from the shaking and the arching up. In this way, the probability of damage to the solar panel 100 can be reduced.

In some embodiments, optionally, the solar panel 100 has a positioning hole 130 formed at an outer edge of a part of the solar panel 100 located between two adjacent connection hole groups 110.

In this embodiment, the arrangement position of the positioning hole 130 is further defined.

Specifically, the positioning hole 130 is disposed at the outer edge of the part, located between the two adjacent connection hole groups 110, of the solar panel 100. That is, the positioning hole 130 is located at the outer edge 120 of the solar panel. In this way, interference with a part of the solar panel 100 for absorbing light can be avoided, thereby reducing the probability of damage to the solar panel 100 while ensuring operating efficiency of the solar panel 100.

Optionally, the first positioning hole 130a is located at an edge of the solar panel 100.

Optionally, the second positioning hole 130b is located at an edge of the solar panel 100.

In some embodiments, optionally, as shown in FIG. 8, FIG. 9, FIG. 11, and FIG. 12, the lifting member 600 includes a lifting belt 616 and an adjustment portion 614. The lifting belt 616 is threaded through the positioning hole 130. The adjustment portion 614 is disposed at the lifting belt 616. The lifting hole 610 is enclosed by the adjustment portion 614 and the lifting belt 616. The adjustment portion 614 is configured to adjust an area of a region enclosed by the lifting hole 610.

In this embodiment, the structure of the lifting member 600 is further defined in such a manner that the lifting member 600 includes the lifting belt 616 and the adjustment portion 614 configured to adjust the area of the region enclosed by the lifting hole 610. As a result, the area of the region enclosed by the lifting hole 610 can be adjusted in a targeted manner according to actual conditions, for example, increasing the area of the region enclosed by the lifting hole 610 or decreasing the area of the region enclosed by the lifting hole 610. In this way, the use requirement of tensioning the lifting member 600 can be met, and the assembling dimensions of the solar panel 100 and the railing 500 can be guaranteed.

Optionally, the adjustment portion 614 has a structure same as a structure of the connector 220.

In some embodiments, optionally, the lifting member 600 is a flexible lifting member.

In this embodiment, the structure of the lifting member 600 is further defined in such a manner that the lifting member 600 is the flexible lifting member, that is, the lifting member 600 has an adjustable shape. In this way, the lifting member 600 can match the railings 500 of different shapes to allow the solar panel 100 to be effectively assembled on the railing 500. Moreover, the assembling dimensions of the solar panel 100 and the railing 500 can be easily adjusted.

Optionally, the lifting member 600 includes any one of a cable, a zip tie, or a tensioning rope 210 or a combination thereof, which are not enumerated herein.

In some embodiments, optionally, as shown in FIG. 8, FIG. 9, FIG. 11, FIG. 12, FIG. 13, FIG. 14, FIG. 15, FIG. 16, and FIG. 17, the solar panel assembly 10 further includes a plurality of protective members 400 and a plurality of protective structures 700. The tensioning rope 210 is threaded through each of the connection holes 112 via a corresponding protective member of the plurality of protective members 400. The lifting member 600 is threaded through each of the plurality of positioning holes 130 via a corresponding protective structure of the plurality of protective structures 700.

In this embodiment, the structure of the solar panel assembly 10 is further defined in such a manner that the solar panel assembly 10 further includes the plurality of protective members 400 and the plurality of protective structures 700.

Each of the connection holes 112 is fitted with the tensioning rope 210 via a corresponding protective member 400. Specifically, the tensioning rope 210 is threaded through each of the connection holes 112 via a corresponding protective member 400.

The protective member 400 is located between the connection hole 112 and the tensioning rope 210 and can protect the connection hole 112. In this way, the tensioning rope 210 is unlikely to be in direct contact with a hole wall of the connection hole 112. This reduces a probability of damage to the solar panel 100 caused by damage to the hole wall of the connection hole 112, thereby extending the service life of the solar panel 100.

Each of the positioning holes 130 is fitted with one of the lifting members 600 via a corresponding protective structure 700. Specifically, the lifting member 600 is threaded through each of the positioning holes 130 via a corresponding protective structure 700.

The protective structure 700 is located between the positioning hole 130 and the lifting member 600 and can protect the positioning hole 130. In this way, the lifting member 600 is unlikely to be in direct contact with a hole wall of the positioning hole 130. This reduces a probability of damage to the solar panel 100 caused by damage to the hole wall of the positioning hole 130, thereby extending the service life of the solar panel 100.

Optionally, the protective member 400 is detachably connected to the connection hole 112 through, for example, screw connection, riveting, magnetic connection, insertion and so on. This configuration facilitates cleaning and maintenance of the protective member 400 and the connection hole 112 while ensuring reliability of the connection between the protective member 400 and the connection hole 112.

That is, the protective member 400 and the connection hole 112 are separated from each other or assembled together according to actual use needs. For example, when the protective member 400 is severely damaged, the protective member 400 can be removed and replaced with a new protective member 400 without affecting use of other components of the solar panel assembly 10.

Optionally, the protective structure 700 is detachably connected to the positioning hole 130 through, for example, screw connection, riveting, magnetic connection, insertion. This configuration facilitates cleaning and maintenance of the protective structure 700 and the positioning hole 130 while ensuring reliability of the connection between the protective structure 700 and the positioning hole 130.

That is, the protective structure 700 and the positioning hole 130 are separated from each other or assembled together according to actual use needs. For example, when the protective structure 700 is severely damaged, the protective structure 700 can be disassembled and replaced with a new protective structure 700 without affecting use of other components of the solar panel assembly 10.

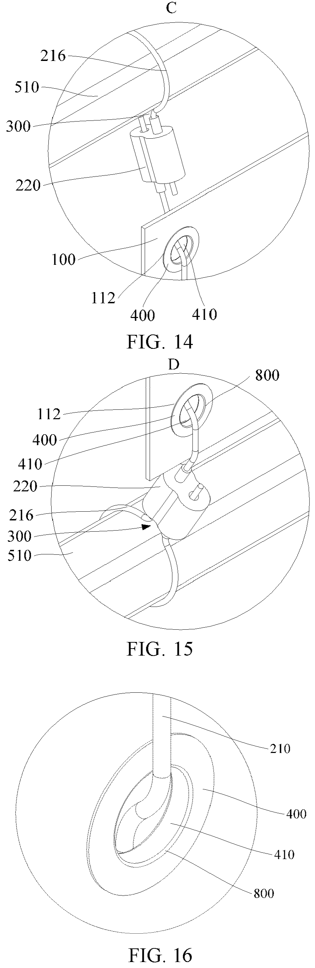

In some embodiments, optionally, as shown in FIG. 16, a hole wall of each of the plurality of connection holes 112 is covered by a corresponding protective member of the protective members 400, and each protective member 400 has a through hole 410. The tensioning rope 210 is threaded through the through hole 410, and a chamfer 800 is provided at a part of the protective member 400 where the tensioning rope 210 is connected to the through hole 410.

In this embodiment, the fitting structure between the protective member 400 and the connection hole 112 is further defined in such a manner that the protective member 400 has the through hole 410, and the tensioning rope 210 can be threaded through the through hole 410.

The hole wall of the connection hole 112 is covered by the protective member 400. This configuration enables the protective member 400 to protect the hole wall of the connection hole 112 in all directions and at all angles, thereby preventing the hole wall of the connection hole 112 from being in direct contact with the tensioning rope 210.

The chamfer 800 is disposed at the part of the protective member 400 where the tensioning rope 210 is connected with the through hole 410. This arrangement can prevent the tensioning rope 210 from being cut, and can thus protect the tensioning rope 210, facilitating the prolongation of the service life of the tensioning rope 210.

Optionally, the protective member 400 is a metallic member. Thus, the protective member 400 has high strength, facilitating the prolongation of the service life of the protective member 400.

In some embodiments, optionally, as shown in FIG. 8, FIG. 9, FIG. 11, and FIG. 12, a hole wall of the positioning hole 130 is covered by each of the plurality of protective structures 700, and each protective structure 700 has a fitting hole 710. The lifting member 600 is threaded through the fitting hole 710, and a chamfer 800 is disposed at a part of the protective structure 700 where the lifting member 600 is connected to the fitting hole 710.

In this embodiment, the fitting structure between the protective structure 700 and the positioning hole 130 is further defined in such a manner that the protective structure 700 has the fitting hole 710, and the lifting member 600 can be threaded through the fitting hole 710.

The hole wall of the positioning hole 130 is covered by the protective structure 700. This configuration enables the protective structure 700 to protect the hole wall of the positioning hole 130 in all directions and at all angles, thereby preventing the hole wall of the positioning hole 130 from being in direct contact with the lifting member 600.

The chamfer 800 is disposed at the part of the protective structure 700 where the lifting member 600 is connected to the fitting hole 710. This configuration can prevent the lifting member 600 from being cut, and can thus protect the lifting member 600, thereby facilitating the prolongation of the service life of the lifting member 600.

Optionally, the protective structure 700 is a metallic member. Thus, the protective structure 700 has high strength, facilitating the prolongation of the service life of the protective structure 700.

In some embodiments, optionally, as shown in FIG. 11, FIG. 13, FIG. 14, FIG. 15, FIG. 19, and FIG. 20, the connection structure 200 further includes two connectors 220. Each of the two connectors 220 is detachably connected to an end 216 of the tensioning rope 210. A mounting hole 300 is enclosed by each of the two connectors 220 and the end 216 of the tensioning rope 210. Each of the two connectors 220 is configured to adjust a length of a part of the tensioning rope 210 located between the two connectors 220.

In this embodiment, the connection structure 200 further includes the two connectors 220. The tensioning rope 210 has two ends 216, each of which is detachably connected to one of the connectors 220. One of the ends 216 of the tensioning rope 210 can be looped around the rod 510 of the railing 500, and the tensioning rope 210 and the rod 510 can then be assembled together using the connection structure 200. It can be understood that the mounting hole 300 is enclosed by the connector 220 and the end 216 of the tensioning rope 210, and the rod 510 is threaded through the mounting hole 300.

Further, each of the two connectors 220 is configured to adjust the length of the part of tensioning rope 210 located between the two connectors 220. That is, the tensioning rope 210 can be pulled by the connector 220 to tighten the tensioning rope 210, thereby adjusting the fitting dimension of the tensioning rope 210 and the solar panel 100 to meet mounting requirements in different mounting scenarios, and thus to provide an effective and reliable structural support for prolonging the service life of the solar panel 100.

In some embodiments, optionally, as shown in FIG. 11, FIG. 13, FIG. 14, FIG. 15, FIG. 19, and FIG. 20, each of the two connectors 220 includes a connector body 222 and a switch 224. The connector body 222 is configured to allow the tensioning rope 210 to move in a third direction to reduce the length of the part of tensioning rope 210 located between the two connectors 220. The switch 224 is disposed at the connector body 222. The connector body 222 is further configured to, when the switch 224 is triggered, allow the tensioning rope 210 to move in a fourth direction to increase the length of the part of tensioning rope 210 located between two connectors 220. The third direction and the fourth direction are opposite to each other.

In this embodiment, the structure of the connector 220 is further defined in such a manner that each of the two connectors 220 includes the connector body 222 configured to allow the tensioning rope 210 to move in the third direction, to reduce the length of the part of the tensioning rope 210 located between the two connectors 220. That is, the connector body 222 can unidirectionally adjust the length of the part of the tensioning rope 210 located between the two connectors 220 to meet the use requirement of tightening the tensioning rope 210.

Furthermore, since the tensioning rope 210 is tightened unidirectionally, the tensioning rope 210 is unlikely to be loosened even if an operator accidentally touches the tensioning rope 210 or in a strong wind environment. Thus, the fitting dimension between the plurality of connection structures 200 and the solar panel 100 can be ensured. Thus, the service life of the solar panels 100 can be ensured.

The structure of the connector 220 is further limited in such a manner that the connector 220 further includes the switch 224 disposed at the connector body 222. That is, the connector body 222 serves as a mounting carrier for the switch 224 and performs mounting and fixing functions for the switch 224.

When the tensioning rope 210 needs to be loosened, in the case that the switch 224 is triggered, the tensioning rope 210 can move in the fourth direction via the connector body 222, thereby increasing the length of the part of the tensioning rope 210 located between the two connectors 220.

That is, the tensioning rope 210 can move in the fourth direction only when the switch 224 is operated. In this way, loosening of the tensioning rope 210 can be effectively prevented due to accidental touch of the connector body 222 by the user. As a result, effectiveness and feasibility of the solar panel assembly 10 during use are met, and safety and reliability of the solar panel assembly 10 during use are improved, facilitating prolongation of the service life of the solar panel 100. That is, the tensioning rope 210 can be adjusted bidirectionally.

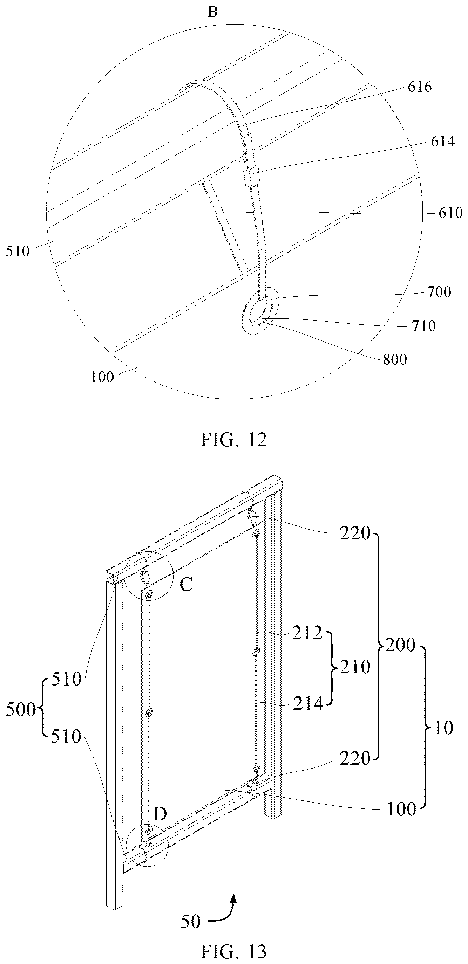

In some embodiments, optionally, as shown in FIG. 13, FIG. 14, FIG. 15, FIG. 19, and FIG. 20, the connector body 222 includes a first cylinder 2222 and a second cylinder 2224. The second cylinder 2224 is connected to a side of the first cylinder 2222. The end 216 of the tensioning rope 210 passes through the first cylinder 2222 and is inserted into the second cylinder 2224. The mounting hole 300 is enclosed by the end 216 of the tensioning rope 210, the first cylinder 2222, and the second cylinder 2224. Each of the first cylinder 2222 and the second cylinder 2224 is provided with the switch 224.

In this embodiment, the structure of the connector body 222 is further defined in such a manner that the connector body 222 includes the first cylinder 2222 and the second cylinder 2224. The first cylinder 2222 is connected to the second cylinder 2224 and located at a side of the second cylinder 2224. Specifically, a first axis of the first cylinder 2222 is located on a side of a second axis of the second cylinder 2224.

The end 216 of the tensioning rope 210 is inserted into the second cylinder 2224 through the first cylinder 2222. The mounting hole 300 is enclosed by the end 216 of the tensioning rope 210, the first cylinder 2222, and the second cylinder 2224. That is, the end 216 of the tensioning rope 210 first passes through the first cylinder 2222, and then passes through the second cylinder 2224.

Each of the first cylinder 2222 and the second cylinder 2224 is provided with the switch 224. That is, the first cylinder 2222 is provided with a switch 224, and the second cylinder 2224 is provided with a switch 224. When the tensioning rope 210 needs to move in the fourth direction, the switch 224 at the first cylinder 2222 and the switch 224 at the second cylinder 2224 are triggered, such that the connector body 222 can allow the tensioning rope 210 to move in the fourth direction, thereby increasing the length of the part of the tensioning rope 210 located between the two connectors 220.

In some embodiments, optionally, as shown in FIG. 8 and FIG. 9, the adjustment portion 614 has a structure same as a structure of a corresponding connector 220 of the two connectors 220.

In this embodiment, the structure of the adjustment structure is further defined in such a manner that the structure of the adjustment portion 614 is the same as that of the corresponding connector 220 of the two connectors 220. That is, the adjustment portion 614 includes the connector body 222 and the switch 224, and the connector body 222 includes the first cylinder 2222 and the second cylinder 2224.

Optionally, the lifting member 600 includes a lifting rope, and the adjustment portion 614 cooperates with the lifting rope. An operating principle of the adjustment portion 614 is the same as that of the connection structure 200, which is not described in detail herein.

Optionally, the first direction is perpendicular to the second direction, and one of the first direction and the second direction is a gravity direction.

The arrangement positions of the plurality of connection hole groups 110 are further defined in such a manner that the arrangement direction of the plurality of connection hole groups 110 is perpendicular to the arrangement direction of the plurality of connection holes 112. For example, the plurality of connection hole groups 110 are spaced apart from each other in a horizontal direction, and the plurality of connection holes 112 in each of the plurality of connection hole groups 110 are spaced apart from each other in the gravity direction. For another example, the plurality of connection hole groups 110 are spaced apart from each other in the gravity direction, and the plurality of connection holes 112 in each of the plurality of connection hole groups 110 are spaced apart from each other in the horizontal direction.

The plurality of connection hole groups 110 spaced apart from each other in the horizontal direction and the plurality of connection holes 112 in each of the plurality of connection hole groups 110 spaced apart from each other in the gravity direction are taken as an example for illustration. This configuration allows the solar panel 100 to be subjected only to a horizontal force rather than a vertical tensile force, preventing the solar panel 100 from being subjected to an additional tensile force generated by the tensile membrane effect, thereby protecting the solar panel 100 from damage.

As shown in FIG. 8, FIG. 11 and FIG. 13, a railing assembly 50 according to some other embodiments of the present disclosure includes a railing 500 and the solar panel assembly 10 in any one of the embodiments described above. The railing 500 includes a plurality of rods 510. Each of the tensioning ropes 210 has an end that is connected to a corresponding rod of the plurality of rods 510. One of the plurality of rods 510 is threaded through a corresponding lifting hole of the lifting holes 610.

The railing assembly 50 according to the present disclosure includes the railing 500 and the solar panel assembly 10. Since the railing assembly 50 includes the solar panel assembly 10 in any one of the embodiments described above, it has all the beneficial effects of the above-mentioned solar panel assembly 10, which are not enumerated herein.

It can be understood that one end of each of the tensioning ropes 210 is connected to the one of the plurality of rods 510. Specifically, one of the plurality of rods 510 is threaded through each of the mounting holes 300 of the solar panel assembly 10 to allow the solar panel assembly 10 to be effectively assembled with the railing 500.

It can be understood that one of the plurality of rods 510 is threaded through each of the lifting holes 610 to allow the solar panel assembly 10 to be effectively assembled with the railing 500.

In the present disclosure, in the case that the fitting structure between the solar panel assembly 10 and the railing 500 is rationally arranged and the high-strength tensioning rope 210 is threaded through the connection hole group 110, the contact area between the connection hole group 110 and the tensioning rope 210 can be increased, and the solar panel 100 is only subjected to the horizontal forces rather than the vertical tensile forces under the load.

The high-strength tensioning rope 210 is fixed to the rod 510 of the railing 500 via the connector 220. In a tensioning direction, the tensioning rope 210 can be pulled tighter and tighter. The movement in the loosening direction is not restricted. In the case that the movement in a loosening direction is required, the switch 224 of the connector 220 needs to be pressed so that the tensioning rope 210 can slide.

The solar panel 100 of the present disclosure does not need to be subjected to the additional tension generated by the tensile membrane effect, and thus the solar panel 100 is not damaged.

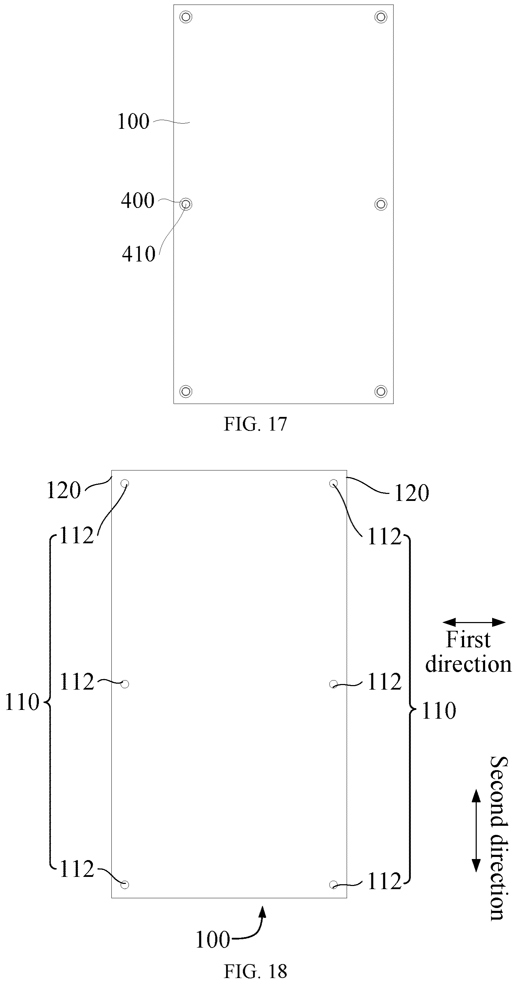

As shown in FIG. 18, the solar panel 100 is provided with a connection hole group 110 at a periphery of the solar panel 100. The connection hole group 110 includes a plurality of connection holes 112. A protective member 400 is provided at each of the plurality of connection holes 112 and configured to cover the connection hole 112.

As shown in FIG. 13, the solar panel 100 is fixed to the railing 500 via the high-strength tensioning rope 210. Each of the two ends of the high-strength tensioning rope 210 are fixed by a corresponding connector 220. The protective member 400 is provided with a chamfer 800 to reduce resistance when the tensioning rope 210 is threaded through the protective member 400. As a result, the tensioning rope 210 is easily tightened, which is convenient for the mounting.

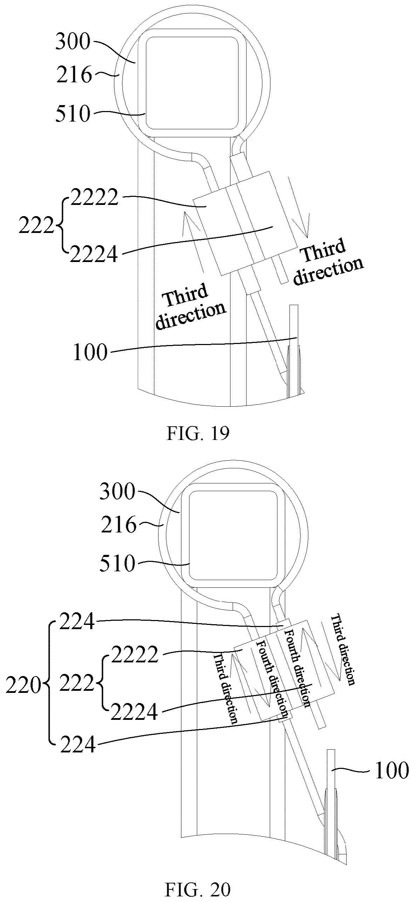

As shown in FIG. 19 and FIG. 20, the connector 220 can be tightened unidirectionally under normal conditions to ensure that the tensioning rope 210 does not loosen. In the case that the switch 224 is turned on, the tensioning rope 210 can be adjusted bidirectionally to complete the disassembling of the solar panel 100.

As shown in FIG. 8 and FIG. 11, when the dimension of the solar panel 100 is relatively large, the middle part of the solar panel 100 is prone to shaking and arching up under horizontal load. Therefore, the positioning hole 130 and the protective structure 700 can be added in the middle part of the solar panel 100. The lifting member 600 includes a lifting belt 616 and an adjustment portion 614. The adjustment portion 614 has a structure same as a structure of the connector 220. Alternatively, the adjustment portion 614 is a zip tie.

In some other embodiments, a part of the solar panel 100 located inside the outer edge thereof is referred to as the middle part of the solar panel 100. Some connection hole groups 110 among the plurality of connection hole groups 110 are located in the middle part of the solar panel 100, and another connection hole groups 110 among the plurality of connection hole groups 110 are located at the edge of the solar panel 100.

Optionally, the tensioning rope 210 includes at least one first tensioning segment 212.

Optionally, the tensioning rope 210 includes at least one second tensioning segment 214.

The arrow in FIG. 19 indicates the third direction.

Optionally, the third direction includes a clockwise direction.

Optionally, the third direction includes a counterclockwise direction.

In FIG. 20, the inner side arrows indicate the fourth direction, and the outer side arrows indicate the third direction.

In the present disclosure, "a plurality of" means two or more, unless specified otherwise. The terms such as "mounted," "connected," "coupled" and "fixed" are understood broadly, such as fixed, detachable mountings, connections and couplings or integrated, and may be direct and via media indirect mountings, connections, and couplings. For those skilled in the art, the specific meaning of the above-mentioned terms in the embodiments of the present disclosure can be understood according to specific circumstances.

In the description of this specification, descriptions with reference to the terms such as "an embodiment", "some embodiments", and "a specific example" mean that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. While the embodiments of the present disclosure have been described above, they are not intended to limit the present disclosure. For those skilled in the art, various changes and variations can be made to the present disclosure. Any modifications, equivalent substitutions, and improvements made within the spirit and principle of the present disclosure are to be encompassed by the scope of the claims of the present disclosure.

## Claims

1. A solar panel assembly, comprising:
a solar panel having at least one connection hole group, each of the at least one connection hole group comprising a plurality of connection holes arranged at intervals; and
at least one connection structure, wherein each of the at least one connection structure is fitted with one of the at least one connection hole group and comprises a tensioning rope, wherein the tensioning rope is sequentially threaded through the plurality of connection holes in the one of the at least one connection hole group, and
wherein a part of the tensioning rope threaded through the plurality of connection holes comprises a first tensioning segment and a second tensioning segment, wherein the first tensioning segment is located on a first side of the solar panel, and the second tensioning segment is located on a second side of the solar panel, and wherein the first side of the solar panel and the second side of the solar panel are opposite to each other.

2. The solar panel assembly according to claim 1, wherein each of the at least one connection structure further comprises two connectors, each of the two connectors being detachably connected to an end of the tensioning rope, wherein a mounting hole is enclosed by each of the two connectors and the end of the tensioning rope, and wherein each of the two connectors is configured to adjust a length of a part of the tensioning rope located between the two connectors.

3. The solar panel assembly according to claim 1 or 2, wherein the solar panel has two connection hole groups, wherein the two connection hole groups are spaced apart from each other in a first direction, wherein a plurality of connection holes in each of the two connection hole groups are spaced apart from each other in a second direction, and
wherein the first direction differs from the second direction.

4. The solar panel assembly according to claim 3, wherein:
the first direction is perpendicular to the second direction, and
one of the first direction and the second direction is a gravity direction.

5. The solar panel assembly according to claim 1 or 2, wherein the solar panel has an outer edge comprising a plurality of connection edges, the plurality of connection edges being sequentially connected end to end, and wherein one of the at least one connection hole group is provided at each of the plurality of connection edges.

6. The solar panel assembly according to claim 2, wherein each of the two connectors comprises a connector body configured to allow the tensioning rope to move in a third direction to reduce the length of the part of the tensioning rope located between the two connectors.

7. The solar panel assembly according to claim 6, wherein:
each of the two connectors further comprises a switch disposed at the connector body; and
the connector body is further configured to, when the switch is triggered, allow the tensioning rope to move in a fourth direction, to increase the length of the part of the tensioning rope located between the two connectors, and
the third direction and the fourth direction are opposite to each other.

8. The solar panel assembly according to claim 7, wherein the connector body comprises:
a first cylinder; and
a second cylinder connected to a side of the first cylinder, the end of the tensioning rope passing through the first cylinder and being inserted into the second cylinder, wherein the mounting hole is enclosed by the end of the tensioning rope, the first cylinder, and the second cylinder,
wherein each of the first cylinder and the second cylinder is provided with the switch.

9. The solar panel assembly according to claim 1 or 2, further comprising:
a plurality of protective members, wherein the tensioning rope is threaded through each of the plurality of connection holes via a corresponding protective member of the plurality of protective members.

10. The solar panel assembly according to claim 9, wherein a hole wall of each of the plurality of connection holes is covered by the corresponding protective member of the plurality of protective members, and each of the plurality of protective members has a through hole, wherein the tensioning rope is threaded through the through hole,
wherein each of the plurality of protective members is a metallic member.

11. The solar panel assembly according to claim 1, wherein:
a plurality of connection hole groups and a plurality of positioning holes are provided in the solar panel, wherein:
the plurality of connection hole groups are spaced apart from each other in a first direction;
a plurality of connection holes are spaced apart from each other in a second direction, the second direction differing from the first direction, and
at least one positioning hole among the plurality of positioning holes is located between any two adjacent connection hole groups among the plurality of connection hole groups; and
each of the at least one connection structure is fitted with one of the plurality of connection hole groups and comprises the tensioning rope, wherein the tensioning rope is sequentially threaded through a plurality of connection holes in the one of the plurality of connection hole groups, and a part of the tensioning rope threaded through the plurality of connection holes comprises a first tensioning segment and a second tensioning segment, wherein the first tensioning segment is located on the first side of the solar panel, and the second tensioning segment is located on the second side of the solar panel, wherein the first side of the solar panel and the second side of the solar panel are opposite to each other; and
the solar panel assembly further comprises a plurality of lifting members, each of the plurality of lifting members being connected to a corresponding positioning hole of the plurality of positioning holes and having a lifting hole.

12. The solar panel assembly according to claim 11, wherein in a case that the plurality of positioning holes are provided between any two adjacent connection hole groups among the plurality of connection hole groups, the plurality of positioning holes located between any two adjacent connection hole groups among the plurality of connection hole groups comprise a first positioning hole and a second positioning hole, the first positioning hole and the second positioning hole being spaced apart from each other in the second direction.

13. The solar panel assembly according to claim 11 or 12, wherein one of the plurality of positioning holes is disposed at an outer edge of a part of the solar panel located between the two adjacent connection hole groups among the plurality of connection hole groups.

14. The solar panel assembly according to claim 11 or 12, wherein each of the plurality of lifting members is a flexible lifting member.

15. The solar panel assembly according to claim 11 or 12, further comprising:
a plurality of protective members, wherein the tensioning rope is threaded through each of the plurality of connection holes via a corresponding protective member of the plurality of protective members; and
a plurality of protective structures, wherein the lifting member is threaded through each of the plurality of positioning holes via a corresponding protective structure of the plurality of protective structures.

16. The solar panel assembly according to claim 15, wherein:
a hole wall of each of the plurality of the connection holes is covered by the corresponding protective member of the plurality of protective members, and each of the plurality of protective members has a through hole, the tensioning rope being threaded through the through hole, and wherein a chamfer is disposed at a part of the protective member where the tensioning rope is connected with the through hole; and
a hole wall of each of the plurality of the positioning holes is covered by the corresponding protective structure of the plurality of protective structures, and each of the plurality of protective structures has a mating hole, the lifting member being threaded through the mating hole, and wherein a chamfer is disposed at a part of the protective structure where the lifting member is connected with the mating hole.

17. The solar panel assembly according to claim 11 or 12, wherein each of the plurality of the lifting members comprises:
a lifting belt threaded through one of the plurality of positioning holes; and
an adjustment portion disposed at the lifting belt, the lifting hole being enclosed by the adjustment portion and the lifting belt, and wherein the adjustment portion is configured to adjust an area of a region enclosed by the lifting hole.

18. The solar panel assembly according to claim 17, wherein each of the at least one connection structure further comprises two connectors, wherein each of the two connectors is detachably connected to an end of the tensioning rope, wherein a mounting hole is enclosed by each of the two connectors and the end of the tensioning rope, wherein each of the two connectors is configured to adjust a length of a part of the tensioning rope located between the two connectors, the adjustment portion having a structure same as a structure of a corresponding connector of the two connectors.

19. A railing assembly, comprising:
a railing comprising a plurality of rods; and
the solar panel assembly according to any one of claims 1 to 18, an end of each tensioning rope being connected to a corresponding rod of the plurality of rods.

20. The railing assembly according to claim 19, wherein the solar panel assembly comprises a lifting member, and the lifting member has lifting holes, one of the plurality of rods being threaded through a corresponding lifting hole of the lifting holes.
